# EUROPEAN PATENT APPLICATION

(11) **EP 1 026 072 A1**
(43) Date of publication of application: **09.08.2000**
(21) Application number: 00200100.6
(22) Date of filing: 12.01.2000
(51) Int. Cl.: B62D 49/06, B62D 33/063

(54) **Vehicle, vehicle combination and method for steering a vehicle**

(30) Priority: 12.01.1999 NL 1010995
(71) Applicant: Veenhuis Voertuigtechnik B.V., 8102 HG Raalte (NL)
(72) Inventor: Veenhuis, Theodorus Johannes Maria, 8102 HG Raalte (NL)
(74) Representative: Louet Feisser, Arnold

(57) **Abstract**

A vehicle (1) comprising a frame (8) with an engine (9), four wheels (6,7), a driver's cabin (10) with a driver's seat and steering means for pivoting each of the four wheels (6,7) about substantially vertical axes (4) with respect to the frame from a straight position of the wheels, wherein the vehicle can drive straight forward. The four wheels (6,7) can be simultaneously pivoted in the same direction from said straight position with respect to the frame thereby, and the driver's seat can pivot about a substantially vertical axis with respect to the frame. Preferably, the driver's cabin is pivotable about a substantially vertical axis (12) together with the driver's seat.

## Description

The invention relates to a vehicle comprising a frame with an engine, four wheels, a driver's cabin with a driver's seat and steering means for pivoting each of the four wheels about substantially vertical axes with respect to the frame from a straight position of the wheels, wherein the vehicle can drive straight forward, wherein the four wheels can be simultaneously pivoted in the same direction from said straight position with respect to the frame. The vehicle may be fitted with more wheels than the aforesaid four, of course.

It is possible to drive straight forward with such a vehicle, wherein the wheels take up the aforesaid straight position. Wheels disposed one behind another travel in the same track thereby. In order to load plough land or grassland, for example, less heavily and/or more evenly the four wheels of such a vehicle can all be pivoted in the same direction through the same angle, and that in such a manner that none of the wheels will travel in another wheel's track.

A vehicle of this kind is for example known from EP-A-0 781 669, which publication discloses a vehicle combination wherein the aforesaid vehicle is arranged as the tractive vehicle for a semitrailer.

The steering of such a vehicle is a relatively complex matter. Especially driving "obliquely" forward is a manoeuvre which an inexperienced driver can only manage with difficulty and not without problems, and which even an experienced driver finds difficult to get used to, so that it is not inconceivable that he will make errors, in particular when driving off from standstill.

The object of the invention is to provide a vehicle of the aforesaid kind which is easier to steer.

In order to accomplish that objective, the vehicle is so arranged that the driver's seat can pivot about a substantially vertical axis with respect to the frame. Preferably, the driver's cabin is pivotable about a substantially vertical axis together with the driver's seat. In particular when driving "obliquely" forward, this enables the driver to be seated in such a manner that he will face straight ahead while driving, which he experiences as comfortable and natural.

Preferably, the substantially vertical axis about which the driver's seat can pivot extends through the space inside the driver's cabin, more preferably centrally through the driver's cabin. As a result, the position of the driver's cabin is hardly shifted, if at all, during said pivoting, thus making it possible to realise a compact construction.

In one preferred embodiment the driver's cabin is positioned substantially forward of the front wheels of the vehicle, so that the vehicle has a large amount of space available for a load behind the driver's cabin. The vehicle engine will preferably be disposed under the driver's cabin thereby.

Preferably, control means are present for pivoting the driver's seat in the same direction with respect to the frame as the rear wheels in dependence on the pivoting of the rear wheels of the vehicle. When the driver's seat is pivoted so that the direction in which the driver faces in the driver's cabin corresponds to the direction in which the rear two wheels of the aforesaid four wheels extend, the driver's position will be comfortable at all times and to his mind he can drive the vehicle in a natural manner in that position, in particular when driving "obliquely" forward.

Preferably, the driver's cabin is to a large part disposed forward of the front wheels of the vehicle, as a result of which a good weight distribution can be obtained when the vehicle is to carry a heavy load, and a great deal of space is present above the vehicle for such a load.

The invention furthermore relates to a vehicle combination (an articulated lorry or truck) comprising a semitrailer and a vehicle as described above, which is arranged as the tractive vehicle for the semitrailer. Preferably, the front part of the trailer extends as far as near the front wheels of the vehicle, so that a relatively large trailer can be used, whose length behind the vehicle is comparatively small.

The invention furthermore relates to a method for steering a vehicle comprising a frame with an engine, four wheels and a driver's cabin with a driver's seat, wherein each of the four wheels is pivoted about substantially vertical axes with respect to the frame from a straight position of the wheels, wherein the vehicle drives straight forward, to a pivoted position of the wheels, wherein the vehicle likewise drives straight forward, wherein the driver's seat is pivoted about a substantially vertical axis with respect to the frame, in the same direction and through substantially the same angle as the angle through which the wheels have been pivoted from said straight position.

Further aspects of the invention, which can be used individually or in combination with each other, are mentioned in the description of the figures and defined in the claims.

In order to explain the invention more fully, an embodiment of a vehicle will be described hereafter with reference to the drawing.
Figure 1 is a top plan view of a vehicle combination which drives straight forward; and
Figure 2 shows the same vehicle combination, which drives "obliquely" forward.

The two figures are merely very diagrammatic representations, wherein only the relevant parts of the vehicle combination are shown.

The vehicle combination consists of a tractive vehicle 1 and a semitrailer 2. The trailer 2 comprises two wheels 3 near its rear side, and it is connected to the tractive vehicle 1 by means of a more forwardly positioned attachment 4. The trailer 2 can pivot about a vertical axis with respect to vehicle 1 at the location of attachment 4. Trailer 2 is for example fitted with a tank 5, in which a liquid can be stored, which tank 5 is spaced from the ground by a distance such that wheels 3, 7 can be positioned under the tank 5.

The tractive vehicle 1 comprises two front wheels 6 and two rear wheels 7, which are mounted on frame 8 and which are all pivotable about respective vertical axes. The four wheels 6, 7 of the vehicle can all be driven by means of an engine 9 which is mounted in frame 8, near the front wheels 6.

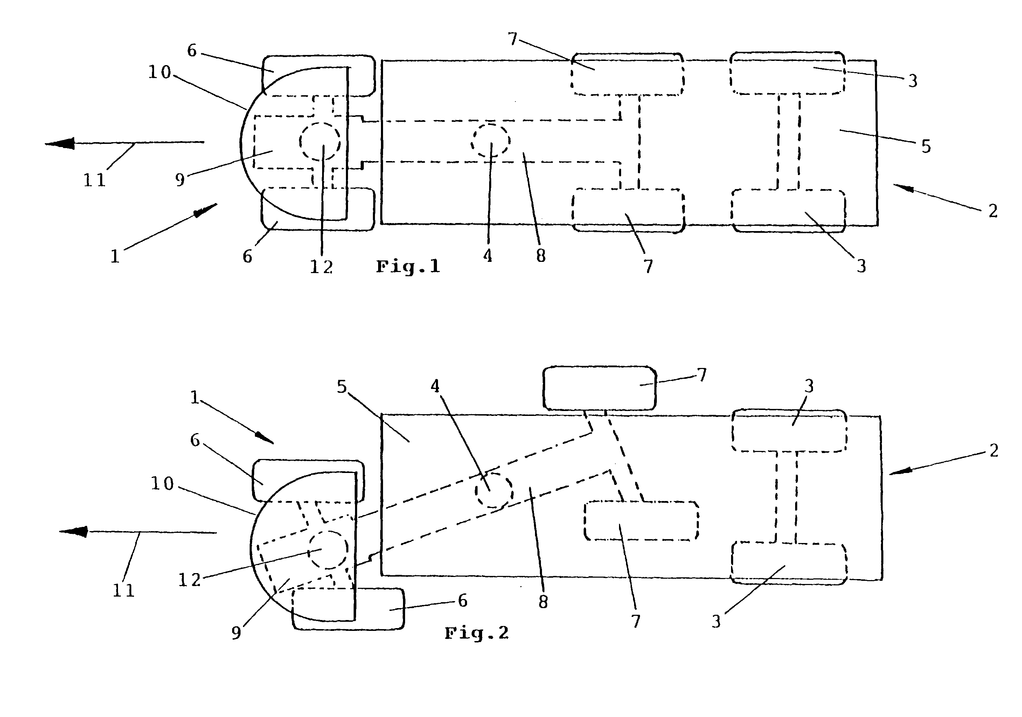

The driver's cabin 10 is disposed above engine 9 and comprises a seat (not shown) for the driver (driver's seat) and a large, curved window which gives the driver a free view on the front side of the vehicle combination 1, 2. In both situations (Figures 1 and 2) the vehicle combination drives forward in the direction indicated by arrow 11.

In the situation which is shown in Figure 1 the vehicle combination 1, 2 is driving straight forward, with the wheels on the left-hand side as well as those on the right hand side travelling in each other's track. Bends can be taken by steering the front wheels 6 of the tractive vehicle 1, with the other wheels 7, 3 following. Possibly, the rear wheels 7 of vehicle 1 can be steered in opposite direction, thus preventing the semitrailer 2 from cutting off the corner.

Figure 2 shows the situation wherein the vehicle combination is driven in so-called dog gait, that is, wheels 3, 6, 7 do not travel in each other's track while the vehicle combination is driving forward in a straight direction indicated by arrow 11. By driving in the "oblique" manner, the ground on which the vehicle combination is driven is loaded less heavily and more evenly, which is especially important when a vehicle carrying a very heavy load is driven over plough land or grassland.

From the figures it is apparent that all wheels 6, 7 of the vehicle 1 are pivoted in the same direction with respect to frame 8 in that case. The vehicle combination can take a bend by steering the front wheels 6 of vehicle 1.

The driver's cabin 10 is mounted on frame 8 by means of an attachment 12. Said attachment is so arranged that the driver's cabin 10 and the driver's seat present therein can continue to face in the direction of travel 11 of vehicle 11 at all times, which makes it considerably easier to drive the vehicle combination 1, 2.

Since the driver's cabin 10 is disposed far to the front, trailer 2 can extend over a great part of the length of vehicle 1. It is possible to place driver's cabin 10 even further forward than in the illustrated embodiment, thus achieving an even better weight distribution over the axles of the vehicle, in particular when transporting very heavy loads. In addition, the trailer 2 can extend even further to the front in that case.

The illustrated embodiment is to be considered a mere example of a vehicle combination. Many other embodiments both of vehicle 1 and of the vehicle combination 1, 2 are possible.

## Claims

1. A vehicle comprising a frame with an engine, four wheels, a driver's cabin with a driver's seat and steering means for pivoting each of the four wheels about substantially vertical axes with respect to the frame from a straight position of the wheels, wherein the vehicle can drive straight forward, wherein the four wheels can be simultaneously pivoted in the same direction from said straight position with respect to the frame, and wherein the driver's seat can pivot about a substantially vertical axis with respect to the frame.

2. A vehicle according to claim 1, characterized in that the driver's cabin is pivotable about a substantially vertical axis together with the driver's seat.

3. A vehicle according to any one of the preceding claims, characterized in that the substantially vertical axis about which the driver's seat can pivot extends through the space inside the driver's cabin, preferably centrally through the driver's cabin.

4. A vehicle according to any one of the preceding claims, characterized in that the driver's cabin is positioned substantially forward of the front wheels of the vehicle.

5. A vehicle according to any one of the preceding claims, characterized in that control means are present for pivoting the driver's seat in the same direction with respect to the frame as the rear wheels in dependence on the pivoting of the rear wheels of the vehicle.

6. A vehicle according to any one of the preceding claims, characterized in that part of the driver's cabin, preferably the larger part, is disposed forward of the front wheels of the vehicle.

7. A vehicle combination comprising a semitrailer and a vehicle according to any one of the preceding claims, which is arranged as the tractive vehicle for said semitrailer.

8. A vehicle combination according to claim 7, characterized in that the front part of the semitrailer extends as far as near the front wheels of the vehicle.

9. A method for steering a vehicle comprising a frame with an engine, four wheels and a driver's cabin with a driver's seat, wherein each of the four wheels is pivoted about substantially vertical axes with respect to the frame from a straight position of the wheels, wherein the vehicle drives straight forward, to a pivoted position of the wheels, wherein the vehicle likewise drives straight forward, wherein the driver's seat is pivoted about a substantially vertical axis with respect to the frame, in the same direction and through substantially the same angle as the angle through which the wheels have been pivoted from said straight position.
